(19) **Europäisches Patentamt / European Patent Office / Office européen des brevets**

(11) **EP 4 359 477 B1**

(12) **EUROPEAN PATENT SPECIFICATION**

(45) Date of publication and mention
of the grant of the patent:
**04.06.2025  Bulletin 2025/23**

(21) Application number: **22735156.6**

(22) Date of filing: **20.06.2022**

(51) International Patent Classification (IPC):
**C08L 25/12** (2006.01)    **C08L 51/04** (2006.01)
**C08L 23/08** (2025.01)

(52) Cooperative Patent Classification (CPC):
(C-Sets available)
**C08L 25/12; C08L 51/04;** C08L 23/0853;
C08L 2201/08; C08L 2205/025; C08L 2205/03;
C08L 2205/035                              (Cont.)

(86) International application number:
**PCT/EP2022/066758**

(87) International publication number:
**WO 2022/268736 (29.12.2022 Gazette 2022/52)**

(54) **WEATHER RESISTANT ASA MOLDING COMPOSITION**

WITTERUNGSBESTÄNDIGE ASA-FORMMASSE

COMPOSITION DE MOULAGE À BASE D'ASA RÉSISTANTE AUX INTEMPÉRIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2021  EP 21181158**

(43) Date of publication of application:
**01.05.2024  Bulletin 2024/18**

(73) Proprietor: **INEOS Styrolution Group GmbH
60325 Frankfurt (DE)**

(72) Inventors:
• **NIESSNER, Norbert
67159 Friedelsheim (DE)**
• **RUTHARD, Christian
55124 Mainz (DE)**
• **MADHAV, Shridhar
Vadodara, 390002 (IN)**

• **GEVARIA, Kirit
Vadodara, 390008 (IN)**
• **AK, Manjula
Vadodara, Gujarat 391740 (IN)**
• **ROHIT, Pankaj
Vadodara, Gujarat 390025 (IN)**
• **MISHRA, Saurabh
Lucknow, Uttar Pradesh 226028 (IN)**

(74) Representative: **Jacobi, Markus Alexander
Patentanwälte
Isenbruck Bösl Hörschler PartG mbB
Eastsite One
Seckenheimer Landstrasse 4
68163 Mannheim (DE)**

(56) References cited:
WO-A1-2021/080215       CN-A- 107 974 028
CN-A- 109 627 622       DE-A1- 4 421 900
JP-A- 2020 176 238       US-A- 5 821 302

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 25/12, C08L 51/04, C08L 25/12, C08L 51/04,
C08L 25/12, C08L 23/0853, C08K 5/12, C08K 3/04,
C08K 5/3435;
C08L 51/04, C08L 25/12, C08L 25/12, C08L 51/04,
C08L 25/12, C08L 23/0853**

**Description**

The present invention relates to a weather resistant acrylonitrile styrene acrylate (ASA) molding composition with improved toughness and reduced yellowness, a process for the preparation of the (thermoplastic) molding composition, shaped articles produced therefrom and its use for various applications.

Thermoplastic acrylonitrile styrene acrylate molding compositions comprising ASA graft copolymers are widely used in automotive, construction and recreation industries mainly due to their good weathering resistance. Various injection- and extrusion molding compositions comprising ASA graft copolymer products are used directly in outdoors without application of coatings or paints.

The core of ASA graft copolymers, an acrylic ester elastomer by virtue of its chemical structure is devoid of any double bonds (C=C) in the main polymer chain. This characteristic of ASA graft copolymers makes them withstand exposure to UV rays, ozone, heat etc. Moreover, ASA graft copolymers have a very good heat resistance. Other polymers considered for similar applications, like ABS graft copolymers and PVC, have very low weathering and heat resistance and undergo color/shade changes on exposure to heat or UV (weathering).

ASA molding compositions are often used pre-colored by addition of pigments as their excellent weathering resistance property does not demand for painting. Usually the dosing of pigments is very high in ASA molding compositions due to the difference in refractive indices of the acrylate rubber polymer and the matrix polymer, often a SAN copolymer. Higher pigment loading further enhances the weathering performance of ASA molding compositions but a high pigment loading is costly and often disadvantageous for the mechanical properties.

The inherent nature of the acrylate rubber core material enhances the above mentioned characteristics of ASA molding compositions, however, there are certain drawbacks also due to a lower flexibility of the stiffer main polymer chain of an acrylate in comparison to a conjugated diene used for ABS graft copolymers. Compared to ABS molding compositions, the impact properties at room temperature and lower temperatures are generally lower for ASA molding compositions.

In order to improve the fluidity and/or toughness, various ASA molding compositions have been proposed.

CN 104592667 A describes a high-flow, high-impact ASA composition comprising 20 to 40 wt.-% ASA graft copolymer, 60 to 80 wt.-% of 2 SAN copolymers with different melt flow rates (10 - 20 g/10 min and 40 to 60 g/10 min; 220°C, 10 kg load) and 2 to 10 wt.-% styrene-maleic anhydride (SMA) as compatibilizer. The ASA graft copolymer has a rubber content 40 to 80 wt.-%; the particle size of the rubber is not mentioned.

JP 2020-176238 A discloses a resin composition containing a PC/ASA-resin (X) and a modified EVA copolymer (Y) which is a graft copolymer obtained by polymerization of styrene, GMA and an epoxy group containing monomer in the presence of the EVA copolymer (A). The EVA copolymer (A) having a VA content of 1 to 30 wt.-%, preferably 3 to 20 wt.-% is preferably used in an amount of 50 or 70 wt.-%; Graft copolymer (Y) is mostly used in an amount of 5 pbw related to 100 pbw PC/ASA resin.

CN 109627622 A describes an ultra-high-flow, high-impact, weather resistant ASA composition comprising 25 to 40 pbw ASA graft copolymer, 50 to 75 pbw SAN copolymer and 3 to 10 pbw flow modifier with a melt flow rate (MFR) of >100 g/10 min (220°C, 10 kg load) selected from EMH (ethylene-acrylate maleic anhydride terpolymer), EBA (ethylene-butyl acrylate copolymer) and EVA (ethylene vinyl acetate copolymer). The rubber content of the ASA graft copolymer is 60 to 70 wt.-%; its particle size is not mentioned. The SAN-copolymer has preferably a MFR of ≥ 50 g/10 min (200°C/10 kg); its AN-content is not disclosed. An exemplified composition comprises 8 pbw of an EVA grade 28-150 (Arkema). The ASA composition is obtained by a process wherein first all components are pre-mixed and then the obtained mixture is melt-extruded and pelletized. The ASA composition can be used as raw material for ASA/PVC synthetic resin tiles.

However, the afore-mentioned prior art compositions are still in need of improvement in respect of properties such as yellowness/whiteness and their gloss and color retention after weathering tests.

Thus, it is an object of the invention to provide a weather resistant ASA molding composition having a high melt flow and high toughness and further a reduced yellowness and improved whiteness and gloss.

One aspect of the invention is a thermoplastic molding composition (TP) comprising (consisting of) components (A), (B), (C), (D) and (E):

(A): 20 to 80 wt.-% - based on (TP) - of a polymer mixture (A) consisting of:
35 to 65 wt.-% - based on (A) - of at least one graft copolymer GR1 with a median weight particle diameter $D_{50}$ of 55 to 170 nm, composed of:

40 to 80 wt.-% - based on GR1 - of a graft base G11 composed of: 80 to 99.99 wt.-% of at least one C1 to C8 alkyl acrylate, and 0.01 to 20 wt.-% of at least one di- or polyfunctional cross-linking monomer, and
20 to 60 wt.-% - based on GR1 - of at least one graft shell G12 composed of: 50 to 95 wt.-% styrene and 5 to 50 wt.-% acrylonitrile,
it being possible for styrene and/or acrylonitrile to be replaced partially (less than 50 wt.-%) by methacrylonitrile, alpha-methylstyrene, methyl methacrylate and/or maleic anhydride or mixtures thereof; and

65 to 35 wt.-% - based on (A) - of at least one copolymer S1 of styrene and acrylonitrile in a weight ratio of from 75:25 to 60:40, it being possible for styrene and/or acrylonitrile to be partially (less than 50 wt.-%) replaced by methacrylonitrile, methyl methacrylate, alpha-methyl styrene and/or maleic anhydride;
where copolymer S1 has a melt volume rate (MVR) of 50 to 70 ml/10 min (DIN EN ISO 1133-1:2012-03; 220°C/10 kg load);

(B): 5 to 35 wt.-% - based on (TP) - of a polymer mixture (B) consisting of:

35 to 65 wt.-% - based on (B) - of at least one graft copolymer GR2 with a median weight particle diameter $D_{50}$ of 410 to 1000 nm, composed of:

40 to 80 wt.-% - based on GR2 - of a graft base G21 composed of:

80 to 99.99 wt.-% of at least one C1 to C8 alkyl acrylate, and
0.01 to 20 wt.-% of at least one di- or polyfunctional cross-linking monomer, and

20 to 60 wt.-% - based on GR2 - of at least one graft shell G22 composed of:

50 to 95 wt.-% styrene and 5 to 50 wt.-% acrylonitrile,
it being possible for styrene and/or acrylonitrile to be replaced partially (less than 50 wt.-%) by methacrylonitrile, alpha-methylstyrene, methyl methacrylate and/or maleic anhydride or mixtures thereof; and

65 to 35 wt.-% - based on (B) - of at least one copolymer S2 of styrene and acrylonitrile in a weight ratio of from 75:25 to 60:40, it being possible for styrene and/or acrylonitrile to be partially (less than 50 wt.-%) replaced by methacrylonitrile, methyl methacrylate, alpha-methyl styrene and/or maleic anhydride;
where copolymer S2 has a melt volume rate (MVR) of 11 to 25 ml/10 min (DIN EN ISO 1133-1:2012-03; 220°C/10 kg load);

(C): 10 to 40 wt.-% of at least one copolymer (C) of styrene and acrylonitrile in a weight ratio of from 75:25 to 60:40, it being possible for styrene and/or acrylonitrile to be partially (less than 50 wt.-%) replaced by methacrylonitrile, methyl methacrylate, alpha-methyl styrene and/or maleic anhydride; where copolymer (C) has a melt volume rate (MVR) of 11 to 70 ml/10 min (DIN EN ISO 1133-1:2012-03; 220°C/10 kg load);

(D): 1 to 15 wt.-% of at least one C2-C8-alkylene-vinylacetate copolymer (D), in particular an ethylene-vinylacetate copolymer, having a vinylacetate content of more than 25 wt.-%, related to (D); and

(E) 0 to 10 wt.-% of additives and/or processing aids, except from fillers and/or fibers; where the sum of components (A) to (E) is 100 wt.-%.

If component (E) is present, its minimum amount is 0.01 wt.-%, based on the entire thermoplastic molding composition (TP).

Wt.-% means percent by weight.

The median weight particle diameter $D_{50}$, also known as the $D_{50}$ value of the integral mass distribution, is defined as the value at which 50 wt.-% of the particles have a diameter smaller than the $D_{50}$ value and 50 wt.-% of the particles have a diameter larger than the $D_{50}$ value.

In the present application the weight-average particle diameter $D_{w}$, in particular the median weight particle diameter $D_{50}$, is determined with a disc centrifuge (e.g.: CPS Instruments Inc. DC 24000 with a disc rotational speed of 24 000 rpm).

The weight-average particle diameter $D_{w}$ is defined by the following formula (see G. Lagaly, O. Schulz and R. Ziemehl, Dispersionen und Emulsionen: Eine Einführung in die Kolloidik feinverteilter Stoffe einschließlich der Tonminerale, Darmstadt: Steinkopf-Verlag 1997, ISBN 3-7985 -1087-3, page 282, formula 8.3b):

$$D_w = \text{sum} \left( n_i * d_i^4 \right) / \text{sum}\left( n_i * d_i^3 \right)$$

$n_i$: number of particles of diameter $d_i$.

The summation is performed from the smallest to largest diameter of the particles size distribution.

In the present application a homo- or copolymer (e.g. graft base G11 or G21, graft shell G12 or G22, copolymer S1, etc.) composed of a monomer 1 and optionally a (co)monomer 2 means a homo- or copolymer composed of polymerized units derived from monomer 1 and optionally polymerized units derived from (co)monomer 2.

It is preferable that the thermoplastic molding composition of the invention comprises (or preferably consists of):

30 to 70 wt.-% component (A),
10 to 30 wt.-% component (B),
15 to 35 wt.-% component (C),
2 to 10 wt.-% component (D),
0.1 to 10 wt.-% component (E).

It is particularly preferable that the molding composition comprises (or consists of):

35 to 60 wt.-% component (A),
15 to 25 wt.-% component (B),
20 to 30 wt.-% component (C),
2.5 to 7 wt.-% component (D),
0.3 to 10 wt.-% component (E).

It is more preferable that the molding composition comprises (or consists of):

35 to 60 wt.-% component (A),
15 to 25 wt.-% component (B),
20 to 30 wt.-% component (C),
3.5 to 7 wt.-% component (D),
0.5 to 10 wt.-% component (E).

It is even more preferable that the molding composition comprises (or consists of):

40 to 55 wt.-% component (A),
18 to 23 wt.-% component (B),
22 to 26 wt.-% component (C),
4 to 6 wt.-% component (D),
0.5 to 8 wt.-% component (E).

Preferred molding compositions (TP) consist of components (A) to (E) in the afore-mentioned amounts.

Component (A)

Preferably polymer mixture (A) (= component (A)) as defined above consists of:

40 to 60 wt.-% of at least one graft copolymer GR1; and
60 to 40 wt.-% of at least one copolymer S1.

More preferably polymer mixture (A) consists of:

45 to 55 wt.-% of at least one graft copolymer GR1; and
55 to 45 wt.-% of at least one copolymer S1.

Preferably polymer mixture (A) has a melt volume rate (MVR) of 27 to 57 ml/10 min (DIN EN ISO 1133-1:2012-03; 220°C/21.6 kg load).

Graft copolymer GR1

Graft copolymer GR1 is a multiphase (= core/shell) copolymer. It is composed of a cross-linked rubbery core phase with a glass transition temperature below 0°C and a hard phase which forms a graft shell G12 and is connected to the rubbery core phase by grafting. The rubbery core phase is designated as the graft base G11 onto which other monomers are grafted to form a graft shell G12.

The graft base G11 of graft copolymer GR1 can be prepared by any conventional polymerization technique, however, free radical emulsion polymerization is preferred (cf. US 2011/275763, p. 4, [0052] through p. 5, [0065]).

The graft base G11 is generally composed of 80 to 99.99 wt.-%, preferably 90 to 99.99 wt.-%, more preferably 95 to 99 wt.-%, of at least one C1 to C8-alkyl acrylate (C1 to C8-alkyl ester of acrylic acid) and 0.01 to 20 wt.-%, preferably 0.01 to 10 wt.-%, more preferably 1 to 5 wt.-%, of at least one di- or polyfunctional cross-linking monomer.

The C1 to C8-alkyl group of the C1 to C8-alkyl acrylate can be of linear or branched structure, often a linear structure is preferred. C2 to C8-alkyl acrylates are preferred.

Particularly suitable C1 to C8-alkyl acrylates, preferably C2 to C8-alkyl acrylates, are ethyl acrylate, 2-ethylhexyl acrylate, and n-butyl acrylate. Preference is given to 2-ethylhexyl acrylate and n-butyl acrylate, and very particular preference is given to n-butyl acrylate.

It is also possible to use a mixture of various alkyl acrylates differing in their alkyl radical.

Suitable di- or polyfunctional cross-linking monomers contain two or more double bonds capable of copolymerization which are not conjugated in the 1,3 positions.

Preferred di- or polyfunctional monomers are divinyl benzene, diallyl maleate, ethylene glycol dimethacrylate, butanediol dimethacrylate, hexanediol dimethacrylate, dihydrodicyclopentadienyl acrylate (DCPA), and the allyl esters of acrylic and methacrylic acid. Particular preference of polyfunctional monomers is given to the acrylic ester of tricyclodecenyl alcohol, which is known as dihydrodicyclopentadienyl acrylate (DCPA), and the allyl ester of methacrylic acid known as allyl methacrylate (AMA).

Processes for the preparation of a graft copolymer which is present as graft copolymer GR1 in the molding composition of the invention are known to the person skilled in the art. A suitable process, in particular by free radical emulsion polymerization, is described in detail in US 2011/0275763. US 2011/0275763 (cf. page 3, [0036] through page 6, [0086]) discloses suitable initiators, molecular weight regulators, dispersing agents, in particular emulsifiers, buffer substances etc., and suitable amounts thereof, as well as suitable polymerization conditions (process parameters such as process temperature - generally 25 to 160°C, preferably 40 to 90°C-) which may be used for each step of the emulsion polymerization.

The median weight particle diameter $D_{50}$ (by ultracentrifuge method) of the graft base G11 is generally from 50 to 165 nm, preferably from 60 to 140 nm, particularly preferably from 70 to 120 nm.

Preferably the swelling index of the graft base G11 is from 5 to 35. The swelling index is a measure of the ability of a solvent to swell a polymer. An example of a conventional swelling agent is methyl ethyl ketone or toluene. By way of example, the swelling index is determined by a method in which about 0.2 g of the solid in a graft-base dispersion converted to a film via evaporation of the water is swollen in an amount of toluene, e.g. 50 g. The toluene is removed by suction after, for example, 24 hours, and the specimen is weighed. The specimen is again weighed after it has been dried in vacuo. The swelling index is the ratio of the weight after the swelling procedure to the dry weight after final drying.

Preferably the gel content of the graft base G11 is more than 80%. The gel content is that content of the product that has been crosslinked, therefore being insoluble in a solvent. The solvent in which gel content is determined is preferably the same as that used for the swelling index. Gel content is calculated from the ratio of the dry weight after the swelling step to the weight prior to the swelling step ($\times$100%).

The obtained graft base G11 (cf. US 2011/275763 A1, p. 4, [0052] through p. 5, [0065]) can be optionally agglomerated (cf. page 5, [0077] through page 6, [0086]). Preferably no agglomeration step is carried out.

In presence of the obtained graft base G11 - optionally after agglomeration - at least one graft shell G12 is produced via an emulsion polymerization of styrene and acrylonitrile, and optionally methacrylonitrile, alpha-methylstyrene, methyl methacrylate and/or maleic anhydride or mixtures thereof. Said monomers are grafted on the graft base G11 to form at least one graft shell G12. The grafting process can be carried out in a single stage or a multistage. The graft polymerization is also preferably carried through a free radical emulsion route using free radical initiators or redox intiators (cp. US 2011/0275763 A1, page 5, [0066] to [0076]).

The obtained dispersion of graft copolymer GR1 is coagulated and optionally and preferably dried in a known manner (cp. DE-OS 1260 135, col. 5, I. 15 to 24) before further processing to obtain a solid and optionally dry product. However, it is also possible to use the wet graft copolymer GR1 directly for further processing steps (e.g. compounding steps). In this case, the solvent (water) is removed during further processing steps (e.g. extrusion).

Preferably graft copolymer GR1 is used as a dried compound, more preferably not completely dried (= residual moisture content 18 to 22 wt.-%), for the preparation of polymer mixture (A).

Graft copolymer GR1 has a median weight particle diameter $D_{50}$ of 55 to 170 nm, preferably 70 to 150 nm, particularly preferably from 80 to 130 nm.

Graft copolymer GR1 is generally composed of:

40 to 80 wt.-%, preferably 50 to 70 wt.-%, of a graft base G11, and

20 to 60 wt.-%, preferably 30 to 50 wt.-%, of at least one graft shell G12.

The amounts of graft base G11 and graft shell G12 always add to give a total of 100% by weight.

Generally graft shell G12 is composed of:

50 to 95 wt.-% styrene and 5 to 50 wt.-% acrylonitrile,
it being possible for styrene and/or acrylonitrile to be replaced partially (less than 50 wt.-%) by methacrylonitrile, alpha-methylstyrene, methyl methacrylate and/or maleic anhydride or mixtures thereof.

Preferably graft shell G12 is composed of:

65 to 80 wt.-% styrene and 20 to 35 wt.-% acrylonitrile,
it being possible for styrene and/or acrylonitrile to be replaced partially (less than 50 wt.-%) by methacrylonitrile, alpha-methylstyrene, methyl methacrylate and/or maleic anhydride or mixtures thereof.

Preferably in graft shell G12 styrene and/or acrylonitrile are not replaced by said other comonomers. Thus, preferably graft shell G12 is solely composed of styrene and acrylonitrile.

Copolymer S1

Copolymer S1 is a copolymer of styrene and acrylonitrile (= SAN copolymer) in a (styrene/acrylonitrile) weight ratio of from 75:25 to 60:40, preferably 70:30 to 60:40, more preferably 70:30 to 65:35, it being possible for styrene and/or acrylonitrile to be partially (less than 50 wt.-%) replaced by methacrylonitrile, methyl methacrylate, alpha-methyl styrene and/or maleic anhydride.

The afore-mentioned weight ratio means that the proportion of (polymerized units of) acrylonitrile present in copolymer S1 is from 25 to 40% by weight, preferably 30 to 40% by weight, more preferably from 30 to 35% by weight, and the proportion of (polymerized units of) styrene present in copolymer S1 is from 60 to 75 % by weight, preferably 60 to 70% by weight, more preferably from 65 to 70% by weight, where the entirety of the amounts of the monomers mentioned is 100% by weight.

Copolymer S1 has a melt volume rate (MVR) of 50 to 70 ml/10 min (DIN EN ISO 1133-1:2012-03; 220°C/10 kg load).

Preferably the weight average molecular weight (Mw) of copolymer S1 is in the range of from 90,000 to 120,000 g/mol (measured via GPC using UV detection (against polystyrene calibration standards)).

Preferably in copolymer S1 styrene and/or acrylonitrile are not replaced by said other comonomers. Thus, preferably copolymer S1 is solely composed of styrene and acrylonitrile. More preferably copolymer S1 is solely composed of styrene and acrylonitrile in a weight ratio of 70:30 to 65:35.

Generally copolymer S1 has a viscosity number (VN) in the range of 50 to 100, preferably in the range of 55 to 80 ml/g (determined according to DIN 53726 at 25°C on a 0.5 wt.-% solution of copolymer S1 in dimethylformamide).

Details relating to the preparation of such copolymers are described, for example, in DE-A 2 420 358, DE-A 2 724 360 and in Kunststoff-Handbuch (Becker/Braun, Gausepohl/Gellert, volume IV, Polystyrol, Carl-Hanser-Verlag, Munich, 1996). Such copolymers prepared by mass (bulk) or solution polymerization in, for example, toluene or ethylbenzene, have proved to be particularly suitable.

Component (B)

Preferably polymer mixture (B) (= component (B)) as defined above consists of:

40 to 60 wt.-% of at least one graft copolymer GR2; and
60 to 40 wt.-% of at least one copolymer S2.

More preferably polymer mixture (B) consists of:

45 to 55 wt.-% of at least one graft copolymer GR2; and
55 to 45 wt.-% of at least one copolymer S2.

Graft copolymer GR2

Graft copolymer GR2 is a multiphase (= core/shell) copolymer. It is composed of a cross-linked rubbery core phase with a glass transition temperature below 0°C and a hard phase which forms a graft shell G22 and is connected to the rubbery core phase by grafting. The rubbery core phase is designated as the graft base G21 onto which other monomers are grafted to form a graft shell G22.

Graft copolymer GR2 has a median weight particle diameter $D_{50}$ of 410 to 1000 nm, preferably from 410 to 800 nm, particularly preferably from 410 to 600 nm.

Generally graft copolymer GR2 is composed of:

40 to 80 wt.-% of a graft base G21, and
20 to 60 wt.-% of at least one graft shell G22.

Preferably graft copolymer GR2 is composed of:

50 to 70 wt.-% of a graft base G21, and
30 to 50 wt.-% of at least one graft shell G22.

The amounts of graft base G21 and graft shell G22 always add to give a total of 100% by weight.

Generally graft base G21 is composed of:
80 to 99.99 wt.-% of at least one C1 to C8-alkyl acrylate, and 0.01 to 20 wt.-% of at least one di- or polyfunctional cross-linking monomer.

The graft base G21 is preferably composed of 90 to 99.99 wt.-%, more preferably 95 to 99 wt.-%, of at least one C1 to C8-alkyl acrylate and 0.01 to 10 wt.-%, more preferably 1 to 5 wt.-%, of at least one di- or polyfunctional cross-linking monomer.

The median weight particle diameter $D_{50}$ (by ultracentrifuge method) of the graft base G21 is generally from 300 to 600 nm, preferably from 350 to 580 nm, particularly preferably from 370 to 560 nm.

Preferably the swelling index of the graft base G21 is from 5 to 25.

Generally graft shell G22 is composed of:

50 to 95 wt.-% styrene and 5 to 50 wt.-% acrylonitrile,
it being possible for styrene and/or acrylonitrile to be replaced partially (less than 50 wt.-%) by methacrylonitrile, alpha-methylstyrene, methyl methacrylate and/or maleic anhydride or mixtures thereof.

Preferably graft shell G22 is composed of:

65 to 80 wt.-% styrene and 20 to 35 wt.-% acrylonitrile,
it being possible for styrene and/or acrylonitrile to be replaced partially (less than 50 wt.-%) by methacrylonitrile, alpha-methylstyrene, methyl methacrylate and/or maleic anhydride or mixtures thereof.

Preferably in graft shell G22 styrene and/or acrylonitrile are not replaced by said other comonomers. Thus, preferably graft shell G22 is solely composed of styrene and acrylonitrile.

Suitable and preferred components such as monomers and cross-linking agents, preparation methods and characteristics - other than the median weight particle diameter $D_{50}$ - of the graft copolymer GR2 are as described above for GR1.

Processes for the preparation of a graft copolymer which is present as graft copolymer GR2 in the molding composition of the invention are known to the person skilled in the art and are described above in relation to graft copolymer GR1 of the molding composition of the invention. Graft copolymer GR2 can be prepared by any conventional polymerization technique, however, free radical emulsion polymerization is preferred. A suitable process, in particular by free radical emulsion polymerization, is described in detail in US 2011/0275763 (cf. page 3, [0036] through page 6, [0086]).

Suitable large size, cross-linked C1-C8 alkylacrylate polymer graft bases G21 can be produced according to known procedures for the production of large size dispersion, conveniently via seeded polymerization, as described in DE 1 911 882 for the production of ASA polymers. According to this method a small size, cross-linked acrylate latex (seed latex) having a median weight particle diameter $D_{50}$ from 50 to 180 nm, preferred less than 120 nm, which is obtained from emulsion polymerization of C1-C8-alkylacrylates and cross-linking monomers, emulsifiers and possibly buffer, is subjected to a further polymerization reaction. The reaction conditions (Journal of Applied Polymer Science, Vol. 9 (1965), pages 2929 to 2938) are adjusted in way only allowing further growth of the present (seed) latex particles, without forming new latex particles. Normally an initiator is used. The particle size of the resulting graft base G21 can be adjusted by variation of the ratio of seed latex to monomers.

Preferably graft copolymer GR2 is used as a dried compound, more preferably not completely dried (residual moisture content 18 to 22 wt.-%), for the preparation of polymer mixture (B).

Copolymer S2

Copolymer S2 is a copolymer of styrene and acrylonitrile (= SAN copolymer) in a (styrene/acrylonitrile) weight ratio of from 75:25 to 60:40, preferably 70:30 to 60:40, more preferably 70:30 to 65:35, it being possible for styrene and/or acrylonitrile to be partially (less than 50 wt.-%) replaced by methacrylonitrile, methyl methacrylate, alpha-methyl styrene and/or maleic anhydride.

Copolymer S2 has a melt volume rate (MVR) of 11 to 25 ml/10 min, preferably 16 to 18 ml/10 min (DIN EN ISO 1133-1:2012-03; 220°C/10 kg load).

Preferably in copolymer S2 styrene and/or acrylonitrile are not replaced by said other comonomers. Thus, preferably copolymer S2 is solely composed of styrene and acrylonitrile. More preferably copolymer S2 is solely composed of styrene and acrylonitrile in a weight ratio of 70:30 to 65:35.

Preferably the weight average molecular weight (Mw) of copolymer S2 is in the range of from 130,000 to 160,000 g/mol (measured via GPC using UV detection (against polystyrene calibration standards)).

Generally copolymer S2 has a viscosity number (VN) in the range of 50 to 100, preferably in the range of 70 to 90 ml/g (determined according to DIN 53726 at 25°C on a 0.5 wt.-% solution of copolymer S2 in dimethylformamide).

Suitable preparation methods for copolymer S2 are as described above for S1.

Component (C)

Component (C) is at least one copolymer (C) of styrene and acrylonitrile in a (styrene/acrylonitrile) weight ratio of from 75:25 to 60:40, preferably 70:30 to 60:40, more preferably 70:30 to 65:35, it being possible for styrene and/or acrylonitrile to be partially (less than 50 wt.-%) replaced by methacrylonitrile, methyl methacrylate, alpha-methyl styrene and/or maleic anhydride.

Copolymer (C) has a melt volume rate (MVR) of from 11 to 70 ml/10 min, preferably 50 to 70 ml/10 min, (DIN EN ISO 1133-1:2012-03; 220°C/10 kg load).

Preferably in copolymer (C) styrene and/or acrylonitrile are not replaced by said other comonomers. Thus, preferably copolymer (C) is solely composed of styrene and acrylonitrile. More preferably copolymer (C) is solely composed of styrene and acrylonitrile in a weight ratio of 70:30 to 65:35.

Preferably the weight average molecular weight (Mw) of copolymer (C) is in the range of from 90,000 to 160,000 g/mol, more preferably 90,000 to 120,000 g/mol (measured via GPC using UV detection (against polystyrene calibration standards)).

Generally copolymer (C) has a viscosity number (VN) in the range of 50 to 100, preferably in the range of 55 to 80 ml/g (determined according to DIN 53726 at 25°C on a 0.5 wt.-% solution of copolymer (C) in dimethylformamide).

Suitable preparation methods for copolymer (C) are as described above for copolymer S1. Preferably as copolymer (C) (= component (C)) a copolymer S1 as described above is used.

Component (D)

Preferably component (D) is present in the molding composition according to the invention in amounts of 2 to 10 wt.-%, more preferably 2.5 to 7 wt.-%, most preferably 3.5 to 7 wt.-%, in particular 4 to 6 wt.-%.

Component (D) is at least one, preferably one, C2 to C8-alkylene-vinylacetate copolymer (D), having a vinylacetate content of more than 25 wt.-%, preferably 25.5 to 30 wt.-%, more preferably 26 to 28 wt.-%.

Preferred as component (D) is an ethylene-vinylacetate (EVA) copolymer having a vinylacetate content of more than 25 wt.-%, preferably 25.5 to 30 wt.-%, more preferably 26 to 28 wt.-%.

Suitable C2-C8-alkylene-vinylacetate copolymers, in particular ethylene-vinylacetate copolymers, which can be used as component (D) are commercially available from Arkema (e.g. Evatane®28-05) or ExxonMobil (e.g. Escorene® Ultra UL 7720, UL 7760).

Component (E)

Various additives and/or processing aids may be used as component (E) for the thermoplastic molding composition according to the invention in amounts of from 0.01 to 10 wt.-%, preferably 0.1 to 10 wt.-%, more preferably 0.3 to 10 wt.-%, most preferably 0.5 to 8 wt.-%.

Suitable additives and/or processing aids (E) include, for example, dyes, pigments, colorants, antistats, antioxidants, stabilizers for improving thermal stability, stabilizers for increasing photostability (= light-stabilizer), stabilizers for enhancing hydrolysis resistance and chemical resistance, anti-thermal decomposition agents, dispersing agents, plasticizers, and in particular external/internal lubricants that are useful for production of molded bodies/articles.

Suitable lubricants/glidants and demolding agents include stearic acids, stearyl alcohol, stearic esters, amide waxes (bisstearylamide, in particular ethylenebisstearamide), polyolefin waxes and/or generally higher fatty acids, derivatives thereof and corresponding fatty acid mixtures comprising 12 to 30 carbon atoms.

Suitable plasticizers are such commonly used for plastics, in particular phthalate-based plasticizers such as bis(2-propylheptyl)phthalate (DPHP). Plasticizers may be used in amounts of up to 5 wt.-%, preferably 0.5 to 3 wt.-%, more preferably 0.7 to 2 wt.-%.

Examples of suitable antioxidants include sterically hindered monocyclic or polycyclic phenolic antioxidants which may comprise various substitutions and may also be bridged by substituents. These include not only monomeric but also oligomeric compounds, which may be constructed of a plurality of phenolic units.

Hydroquinones and hydroquinone analogs are also suitable, as are substituted compounds, and also antioxidants based on tocopherols and derivatives thereof.

It is also possible to use mixtures of different antioxidants. It is possible in principle to use any compounds which are customary in the trade or suitable for styrene copolymers, for example antioxidants from the Irganox range. In addition to the phenolic antioxidants cited above by way of example, it is also possible to use so-called costabilizers, in particular phosphorus- or sulfur-containing costabilizers. These phosphorus- or sulfur-containing costabilizers are known to those skilled in the art.

Examples of suitable stabilizers to counter the effect of light (= light-stabilizer) are various substituted resorcinols, salicylates, benzotriazoles, benzophenones, and HALS (hindered amine light stabilizers), for example those commercially available as Tinuvin®from BASF.

Said light-stabilizers are generally used in amounts up to 5 wt.-%, preferably 0.1 to 2 wt.-%, more preferably 0.3 to 1 wt.-%.

Examples of pigments are titanium dioxide, phthalocyanines, ultramarine blue, iron oxides, and carbon black, in particular carbon black, and the entire class of organic and inorganic pigments.

Said pigments are often used in amounts of 0.01 to 10 wt.-%, preferably 3 to 7 wt.-%.

Preferably component (E) is at least one pigment, light-stabilizer and/or plasticizer.

For further additives and/or processing aids, see, for example, "Plastics Additives Handbook", H. Zweifel, Hanser Publ., 6th Ed. Munich, 2009.

Process for the preparation of the thermoplastic molding composition (TP)

A further aspect of the invention is a process for the preparation of the thermoplastic molding composition (TP) comprising (consisting of) components (A), (B), (C), (D) and (E) according to the invention which process comprises at least the following steps:

(i) providing the at least one - optionally dried - graft copolymer GR1 and the at least one copolymer S1 in the predetermined amounts to an optionally heatable mixing device;
(ii) melt mixing of graft copolymer GR1 and copolymer S1 in the optionally heatable mixing device to obtain the polymer mixture (A) (= component (A));
(iii) providing the at least one - optionally dried - graft copolymer GR2 and the at least one copolymer S2 in the predetermined amounts to an optionally heatable mixing device;
(iv) melt mixing of graft copolymer GR2 and copolymer S2 in the optionally heatable mixing device to obtain the polymer mixture (B);
(v) providing components (A), (B), (C), (D) and, if present, (E), in the predetermined amounts to an optionally heatable mixing device; and
(vi) melt mixing the components (A), (B), (C), (D) and, if present (E), at temperatures in the range of from 180°C to 240°C to obtain the thermoplastic molding composition (TP).

In steps (i) and (iii), graft copolymer GR1 and graft copolymer GR2, respectively, can be used as wet compounds. Optionally, and preferred, in steps (i) and (iii), graft copolymer GR1 and graft copolymer GR2, respectively, are used as dried compounds, more preferably not completely dried compounds (= residual moisture content 18 to 22 wt.-%).

Optionally, prior to step (vi), a step may be carried out, in which a homogenous particulate material mixture is prepared from the components (A) to (E). However, also when provided to the optionally heatable mixing device without previous mixing, in step (vi) a homogenous mixing is typically achieved in the optionally heatable mixing device.

Each of components (A) to (E) - as far as solid - may be provided in form of particulate materials having different particle sizes and particle size distributions (e.g., as pellets, granules and/or powders).

Prior to step (v), in an optional pre-mixing step, components (A) to (E) may be provided to a mixing device (e.g. a high speed mixer) in the required amounts and ratios as previously indicated and optionally pre-mixed in order to obtain a homogenous particulate material mixture. In a preferred embodiment, this may require 1 to 10 minutes, in particular 2 to 5 minutes, depending to the amount of particulate material to be mixed.

Preferably the process according to the invention comprises the afore-mentioned pre-mixing step prior to step (v).

The thus obtained homogenous particulate material mixture of components (A) to (E) is then - in step (v) - transferred to an optionally heatable mixing apparatus and - in step (vi) - blended (melt-mixed) therein, producing a substantially liquid-melt polymer mixture.

"Substantially liquid-melt" means that the polymer mixture, as well as the predominant liquid-melt (softened) fraction, may further comprise a certain fraction of solid constituents, examples being unmelted fillers and reinforcing material such as glass fibers, metal flakes, or else unmelted pigments, colorants, etc. "Liquid-melt" means that the polymer mixture is at least of low fluidity, therefore having softened at least to an extent that it has plastic properties.

Mixing apparatuses used are those known by the person skilled in the art. Components (A) and (B), (C), (D) and - if present - (E) may be mixed, for example, by joint extrusion, kneading, or rolling.

Examples of mixing apparatus for implementing the process include discontinuously operating, heated internal kneading devices with or without RAM, continuously operating kneaders, such as continuous internal kneaders, screw kneaders with axially oscillating screws, Banbury kneaders, furthermore extruders, and also roll mills, mixing roll mills with heated rollers, and calenders.

A preferred mixing apparatus used is an extruder or a kneader. Particularly suitable for melt extrusion are, for example, single-screw or twin-screw extruders. A twin-screw extruder is preferred. In some cases the mechanical energy introduced by the mixing apparatus in the course of mixing is enough to cause the mixture to melt, meaning that the mixing apparatus does not have to be heated. Otherwise, the mixing apparatus is generally heated. Mixing apparatus is operated customarily at 150 to 300°C, preferably 180 to 240°C.

In a preferred embodiment, a heatable twin-screw extruder and a speed of 500 to 600 rpm, preferably 550 rpm, is employed. In a preferred embodiment, an extruding temperature of 170 to 270°C, preferably 210 to 250°C is employed to obtain the thermoplastic molding composition (TP). The thermoplastic molding composition (TP) may be directly used, e.g. in molding processes, preferably injection molding processes, or may be processed to form granules which may be subjected to molding processes afterwards. The molding processes, in particular injection-molding processes, are preferably carried out at temperatures of 170 to 270°C, in particular 220 to 240°C to result in a molded or shaped article.

Thus, a further aspect of the invention are shaped articles produced from the thermoplastic molding composition (TP) according to the invention.

Processing may be carried out using the known processes for thermoplastic processing, in particular production may be effected by thermoforming, extruding, injection molding, calendaring, blow molding, compression molding, press sintering, deep drawing or sintering, preferably by injection molding.

A further aspect of the invention is the use of the thermoplastic molding composition according to the invention and of shaped articles made therefrom for applications in the automotive and construction industry.

The invention is further illustrated by the examples and the claims.

Examples

Graft copolymer GR1: Acrylate graft copolymer produced as in EP 450485 B1 (page 7, line 11 to 24) with a median weight particle diameter $D_{50}$ of 95 nm. After drying the residual moisture content of graft copolymer GR1 was 20 wt.-%.

Graft copolymer GR2: Acrylate graft copolymer produced as in EP 450485 B1 (page 7, lines 25 to 38) with a median weight particle diameter $D_{50}$ of 500 nm. After drying the residual moisture content of graft copolymer GR2 was 20 wt.-%.

Copolymer S1: styrene-acrylonitrile-copolymer (acrylonitrile content: 35 wt.-%) produced by a solution polymerization process; VN: 64 ml/g (DIN 53726 at 25°C on a 0.5 wt.-% solution of copolymer S1 in dimethylformamide), MVR: 51 ml/10 min (DIN EN ISO 1133-1:2012-03; 220°C/10 kg load).

Copolymer S2: styrene-acrylonitrile-copolymer (acrylonitrile content: 35 wt.-%) produced by a solution polymerization process; VN: 80 ml/g (DIN 53726 at 25°C on a 0.5 wt.-% solution of copolymer S2 in dimethylformamide), MVR: 16 to 18 ml/10 min (DIN EN ISO 1133-1:2012-03; 220°C/10 kg load).

Polymer Mixture (A):

prepared by melt mixing graft copolymer GR1 with SAN copolymer S1 in a weight ratio of 50:50 in an extruder (temperature profile 230 to 260°C). During the melt mixing the remaining moisture present in the graft copolymer GR1 is also removed. MVR of (A): 33.6 ml/10min (DIN EN ISO 1133-1:2012-03; 220°C/21.6 kg).

Polymer Mixture (B):

prepared by melt mixing graft copolymer GR2 with SAN copolymer S2 in a weight ratio of 50:50 in an extruder (temperature profile 230 to 260°C). During the melt mixing the remaining moisture present in the graft copolymer GR1 is also removed.

MVR of (B): 27.7 ml/10min (DIN EN ISO 1133-1:2012-03; t 220°C/21.6 kg).

Component (C):

Copolymer S1 as described above

Component (D): Ethylene vinyl acetate copolymer (EVA)

D-1: random copolymer of ethylene and vinyl acetate (VA content 27 to 28 wt.-%) produced by a high pressure radical polymerization process. Melt flow index: 5 to 8 g/10min (DIN EN ISO 1133-1:2012-03; 190°C/2.16 kg); melting temperature: ~72°C (DIN EN ISO 1183-1:2019-09); density: 0.95 g/cm$^3$ at 23°C (DIN EN ISO 1183-1:2019-09); commercially available as EVATANE® 28-05 from Arkema.

D-2: random copolymer of ethylene and vinyl acetate (VA content 26.7 wt.-%) produced by a free radical polymerization process. Melt flow index: 5 g/10min (ASTM D1238, 190°C/2.16 kg); melting temperature: ~73°C (DIN EN ISO 1183-1:2019-09); density: 0.951 g/cm$^3$ at 23°C (ASTM D1505); commercially available as Escorene® Ultra UL 7760 from ExxonMobil.

D-3: random copolymer of ethylene and vinyl acetate (VA content 26.7 wt.-%) produced by a free radical polymerization process. Melt flow index: ~150 g/10min (ASTM D1238; 190°C/2.16 kg); melting temperature: ~66°C (DIN EN ISO 1183-1:2019-09); density: 0.945 g/cm$^3$ at 23°C (DIN EN ISO 1183-1:2019-09); commercially available as Escorene® Ultra UL 7720 from ExxonMobil.

E-1 - DPHP (Dipropylheptyl phthalate) from AEKYUNG petrochemical, Korea.

E-2 - Carbon black masterbatch CB 35 MB (carbon black content: 35 wt.-%; rest: SAN copolymer) from SM Choyang, Korea.

E3 - HALS-stabilizer, Tinuvin® 770 from BASF SE, Germany.

In the examples and comparative examples the components were used in the amounts indicated in Tables 1, 3 and 5 below.

The components were mixed in a high-speed mixer for 2 to 3 minutes to attain a good dispersion and uniform pre-mixture for compounding. The obtained pre-mixture was then melt blended in a twin-screw extruder at a screw speed of 550 rpm and using an incremental temperature profile from 180° C to 240° C for the different barrel zones.

The extruded strands of the obtained molding composition were water cooled, air-dried and pelletized. This was followed by injection molding of the obtained molding composition to shape the standard test specimens. The temperature profile of the injection molding machine barrel was 220 to 240°C incremental. The mold temperature was kept at 70°C.

Testing and Characterization

Melt Flow Index (MFI) or Melt Volume Rate (MVR): test was performed (DIN EN ISO 1133-1:2012-03; 220°C/10 kg) for ASA pellets using an MFI machine of CEAST, Italy.

Charpy Impact test: performed on notched specimens (DIN EN ISO 179-1:2010-11, /1eA) using an Instron, UK impact tester.

Tensile test: carried out at 23°C (DIN EN ISO 527-1:2019-12) using a Universal testing Machine (UTM) of Instron, UK.

Flexural test: carried out (DIN EN ISO 178:2019-08) at 23°C using a UTM of Lloyd Instruments, UK.

Heat deflection temperature (HDT): test was performed on injection molded specimen (DIN EN ISO 75-1:2013-08/ 4 hours annealing of sample at 80°C) using a Zwick Roell, Germany instrument.

Vicat softening temperature (VST): test was performed on injection molded test specimen (DIN EN ISO 306:2014-03/ 30 minutes annealing of sample at 80°C) using a Zwick Roell machine, Germany.

Rockwell Hardness: test was carried out on injection molded test specimen (DIN EN ISO 2039-2:2000-01) using FIE Instruments Pvt Ltd, India.

Weathering test: Details and equipment (see Table below)

| Exposure Apparatus | Atlas Xenon-Arc Weatherometer Ci4000, USA |
|---|---|
| Light Source | Water-cooled Xenon Arc Lamp(6500W) |
| Optical Filters | Inner Type Quartz |
| | Outer Type Borosilicate |
| Spectral Irradiance Exposure | 0.55 W/m$^2$ at 340nm |

(continued)

| Irradiation exposure | 2500 KJ/m$^2$ |
|---|---|
| Black Panel temperature | Light : 70± 2°C, Dark : 38± 2°C |
| Relative Humidity | Light : 50± 5%, Dark : 95± 5% |
| Phase | Phase 1 : 60 min Dark / Spray<br>Phase 2 : 1320J Light<br>Phase 3 : 660J Light / Spray<br>Phase 4 : 1980J Light |

Optical properties

Whiteness, yellowness and ΔE: measured using Datacolor 850, Switzerland (Measurement condition: D/8°, specular included). The color coordinates and ΔE were measured according to the CIE method. Whiteness and yellowness were measured according to ASTM E313-20.

Gloss measured as per ASTM D2457-13 using a gloss meter of BYK Gardner, Germany. Grey Scale determined as per AATCC/ISO 105-A02:1993. Test specimens are visually compared with standard samples and a rating is given. In the following examples and comparative examples the components were used in the amounts indicated on Tables 1, 3 and 5 below.

Table 1

| ASA composition (wt.-%) - Trials Set 1 | | | |
|---|---|---|---|
| Components | Comparative Example 1 | Example 1 | Example 2 |
| A (GR1 + S1/ 50:50) | 49.26 | 49.26 | 49.26 |
| B (GR2 + S2/ 50:50) | 20.49 | 20.49 | 20.49 |
| C (S1) | 28.77 | 25.81 | 23.84 |
| D-1 | 0 | 2.96 | 4.93 |
| E-1 | 1.48 | 1.48 | 1.48 |

Tables 2, 4a and 6 show the properties of the obtained molding compositions.

Table 2

| Properties | Unit | Trials Set 1 | | |
|---|---|---|---|---|
| | | Comparative Example 1 | Example 1 | Example 2 |
| MVR | ml/10 min | 14.5 | 14.5 | 15 |
| Tensile Strength | MPa | 49.5 | 47.0 | 45.5 |
| Tensile Modulus | MPa | 2,620 | 2,490 | 2,400 |
| Elongation at Break | % | 43 | 48 | 50 |
| Flexural Strength | MPa | 70.5 | 65.5 | 63.0 |
| Flexural Modulus | MPa | 2,320 | 2,185 | 2,105 |
| Charpy Notched impact Strength | kJ/m$^2$ | 12.5 | 20.5 | 35 |
| HDT | °C | 96 | 98 | 98 |
| VST | °C | 93.5 | 92.5 | 91.5 |
| Yellowness Index | - | 23.84 | 22.85 | 22.15 |
| Whiteness Index | - | 12.65 | 17.07 | 19.94 |
| Gloss at 60° | % | 96 | 94 | 92 |

Table 3

| | ASA composition (wt.-%) - Trials Set 2 | | |
|---|---|---|---|
| Components | Comparative Example 2 | Example 3 | Example 4 |
| A (GR1 + S1/ 50:50) | 46.18 | 46.18 | 46.40 |
| B (GR2 + S2/ 50:50) | 19.21 | 19.21 | 19.30 |
| C (S1) | 26.97 | 22.35 | 22.46 |
| D-1 | 0 | 4.62 | 4.64 |
| E-1 | 1.39 | 1.39 | 1.39 |
| E-2 | 5.78 | 5.78 | 5.81 |
| E-3 | 0.48 | 0.48 | - |

Table 4a

| Properties | Unit | Trials-Set 2 | | |
|---|---|---|---|---|
| | | Comparative Example 2 | Example 3 | Example 4 |
| MVR | ml/10 min | 12.5 | 12.5 | 13 |
| Tensile Strength | MPa | 51.5 | 47 | 48 |
| Tensile Modulus | MPa | 2,555 | 2,520 | 2,485 |
| Elongation at Break | % | 24 | 33 | 35 |
| Flexural Strength | MPa | 76 | 69 | 69 |
| Flexural Modulus | MPa | 2,515 | 2,290 | 2,290 |
| Charpy Notched impact Strength | $kJ/m^2$ | 10 | 16 | 16 |
| HDT | °C | 98 | 98 | 97 |
| VST | °C | 96 | 93.5 | 93 |
| Gloss at 60° | % | 96 | 96 | 94 |

Table 4b shows the results obtained after weathering of the samples - weathering results

| Material | Duration ($kJ/m^2$) | L* | a* | b* | ΔE* | Gloss (20°) | Gloss (60°) | Grey Scale |
|---|---|---|---|---|---|---|---|---|
| Comparative Example 2 | 0 | 27.16 | -0.05 | -0.99 | - | 95.7 | 97.9 | 5 |
| | 1000 | 26.81 | -0.05 | -0.84 | 0.38 | 81.6 | 92.7 | 4-5 |
| | 2500 | 26.95 | -0.06 | -0.29 | 0.73 | 25.4 | 68.1 | 3 |
| | wash | 27.06 | -0.01 | -0.30 | 0.69 | 29.1 | 71.6 | 3-4 |
| Example 3 | 0 | 26.95 | -0.08 | -0.98 | - | 85.8 | 94.3 | 5 |
| | 1000 | 26.52 | -0.05 | -0.90 | 0.44 | 67.7 | 86.9 | 4-5 |
| | 2500 | 26.15 | -0.09 | -0.57 | 0.89 | 18.6 | 62.4 | 3 |
| | wash | 26.64 | -0.02 | -0.49 | 0.58 | 55.3 | 83.3 | 4 |
| Example 4 | 0 | 27.06 | -0.08 | -1.06 | - | 87.7 | 94.7 | 5 |
| | 1000 | 26.10 | -0.02 | -0.89 | 0.98 | 58.0 | 83.0 | 4 |
| | 2500 | 27.83 | -0.03 | -0.28 | 1.10 | 23.6 | 66.7 | 3 |
| | wash | 28.74 | 0.03 | 0.21 | 2.11 | 38.1 | 81.6 | 3-4 |

Table 5

| | ASA composition (wt.-%) - Trials-Set 3 | | | | |
|---|---|---|---|---|---|
| Components | Comparative Example 1 | Example 5 | Example 6 | Example 7 | Example 8 |
| A (GR1 + S1/ 50:50) | 49.26 | 49.26 | 49.26 | 49.26 | 49.26 |
| B (GR2 + S2/ 50:50) | 20.49 | 20.49 | 20.49 | 20.49 | 20.49 |
| C (S1) | 28.77 | 25.81 | 23.84 | 25.81 | 23.84 |
| D-2 | 0 | 2.96 | 4.93 | - | - |
| D-3 | - | - | - | 2.96 | 4.93 |
| E-1 | 1.48 | 1.48 | 1.48 | 1.48 | 1.48 |

Table 6

| Properties | Unit | Trials-Set 3 | | | | |
|---|---|---|---|---|---|---|
| | | Comparative Example 1 | Example 5 | Example 6 | Example 7 | Example 8 |
| MVR | ml/10 min | 16 | 16 | 16.5 | 16.5 | 18 |
| Tensile Strength | MPa | 52 | 49.5 | 46 | 48.5 | 46.5 |
| Tensile Modulus | MPa | 2,870 | 2,770 | 2,545 | 2,460 | 2,535 |
| Elongation at Break | % | 29 | 33 | 43 | 40 | 35 |
| Flexural Strength | MPa | 76 | 70.5 | 67 | 69 | 66.5 |
| Flexural Modulus | MPa | 2,420 | 2,305 | 2,150 | 2,210 | 2,135 |
| Charpy Notched impact Strength | kJ/m2 | 10 | 17.5 | 33 | 15 | 30 |
| HDT | °C | 96 | 96 | 95.5 | 95 | 94.5 |
| VST | °C | 95 | 93.5 | 91 | 93 | 91.5 |
| Yellowness Index | - | 26.32 | 24.22 | 23.68 | 24.19 | 23.51 |
| Whiteness Index | - | 5.93 | 13.21 | 16.09 | 14.16 | 16.84 |
| Gloss at 60° | % | 95 | 95 | 93 | 94 | 92 |

Examples 1 to 8 according to the invention show that the addition of small amounts of EVA reduces the yellowness index of the ASA composition and significantly improves its whiteness.

This is further beneficial as ASA compositions are mostly manufactured pre-colored. The reduction in the yellowness index will consequentially lower the dosage of pigments required to achieve a desired color tone.

Furthermore, the high-flowable molding compositions according to inventive examples 1 to 8 show a significantly improved impact strength (cp. elongation at break and Charpy notched impact strength). Moreover, EVA has been used in such amounts that the complete mechanical properties of the inventive compositions are not deteriorated and the weather resistance characteristics are enhanced.

It has been further shown that the molding compositions according to inventive examples 3 and 4 have an improved gloss and color retention after the weathering test.

The shaped articles produced from the thermoplastic molding composition according to the invention were found to have improved properties.

**Claims**

1. Thermoplastic molding composition (TP) comprising components (A), (B), (C), (D) and (E):

   (A): 20 to 80 wt.-% - based on (TP) - of a polymer mixture (A) consisting of:

      35 to 65 wt.-% - based on (A) - of at least one graft copolymer GR1 with a median weight particle diameter $D_{50}$ -

determined with a disc centrifuge - of 55 to 170 nm, composed of:

40 to 80 wt.-% - based on GR1 - of a graft base G11 composed of:

80 to 99.99 wt.-% of at least one C1 to C8 alkyl acrylate, and
0.01 to 20 wt.-% of at least one di- or polyfunctional cross-linking monomer, and

20 to 60 wt.-% - based on GR1 - of at least one graft shell G12 composed of:

50 to 95 wt.-% styrene and 5 to 50 wt.-% acrylonitrile,
it being possible for styrene and/or acrylonitrile to be replaced partially (less than 50 wt.-%) by methacrylonitrile, alpha-methylstyrene, methyl methacrylate and/or maleic anhydride or mixtures thereof; and

65 to 35 wt.-% - based on (A) - of at least one copolymer S1 of styrene and acrylonitrile in a weight ratio of from 75:25 to 60:40, it being possible for styrene and/or acrylonitrile to be partially (less than 50 wt.-%) replaced by methacrylonitrile, methyl methacrylate, alpha-methyl styrene and/or maleic anhydride;
where copolymer S1 has a melt volume rate (MVR) of 50 to 70 ml/10 min (DIN EN ISO 1133-1:2012-03; 220°C/10 kg load);

(B): 5 to 35 wt.-% - based on (TP) - of a polymer mixture (B) consisting of:
35 to 65 wt.-% - based on (B) - of at least one graft copolymer GR2 with a median weight particle diameter $D_{50}$ - determined with a disc centrifuge - of 410 to 1000 nm, composed of:

40 to 80 wt.-% - based on GR2 - of a graft base G21 composed of:

80 to 99.99 wt.-% of at least one C1 to C8 alkyl acrylate, and
0.01 to 20 wt.-% of at least one di- or polyfunctional cross-linking monomer, and

20 to 60 wt.-% - based on GR2 - of at least one graft shell G22 composed of:
50 to 95 wt.-% styrene and 5 to 50 wt.-% acrylonitrile,
it being possible for styrene and/or acrylonitrile to be replaced partially (less than 50 wt.-%) by methacrylonitrile, alpha-methylstyrene, methyl methacrylate and/or maleic anhydride or mixtures thereof; and

65 to 35 wt.-% - based on (B) - of at least one copolymer S2 of styrene and acrylonitrile in a weight ratio of from 75:25 to 60:40, it being possible for styrene and/or acrylonitrile to be partially (less than 50 wt.-%) replaced by methacrylonitrile, methyl methacrylate, alpha-methyl styrene and/or maleic anhydride;
where copolymer S2 has a melt volume rate (MVR) of 11 to 25 ml/10 min (DIN EN ISO 1133-1:2012-03; 220°C/10 kg load);

(C): 10 to 40 wt.-% of at least one copolymer (C) of styrene and acrylonitrile in a weight ratio of from 75:25 to 60:40, it being possible for styrene and/or acrylonitrile to be partially (less than 50 wt.-%) replaced by methacrylonitrile, methyl methacrylate, alpha-methyl styrene and/or maleic anhydride;
where copolymer (C) has a melt volume rate (MVR) of 11 to 70 ml/10 min (DIN EN ISO 1133-1:2012-03; 220°C/10 kg load);
(D): 1 to 15 wt.-% of at least one C2-C8-alkylene-vinylacetate copolymer (D) having a vinylacetate content of more than 25 wt.-%, related to (D); and
(E): 0 to 10 wt.-% of additives and/or processing aids.

2. Thermoplastic molding composition (TP) according to claim 1 comprising:

35 to 60 wt.-% component (A),
15 to 25 wt.-% component (B),
20 to 30 wt.-% component (C),
2.5 to 7 wt.-% component (D),
0.3 to 10 wt.-% component (E).

3. Thermoplastic molding composition (TP) according to claim 1 or 2 comprising:

40 to 55 wt.-% component (A),
18 to 23 wt.-% component (B),
22 to 26 wt.-% component (C),
4 to 6 wt.-% component (D),
0.5 to 8 wt.-% component (E).

4. Thermoplastic molding composition (TP) according to any of claims 1 to 3 wherein C2-C8-alkylene-vinylacetate copolymer (D) has a vinylacetate content of 25.5 to 30 wt.-%, preferably 26 to 28 wt.-%.

5. Thermoplastic molding composition (TP) according to any of claims 1 to 4 wherein C2-C8-alkylene-vinylacetate copolymer (D) is an ethylene-vinylacetate copolymer.

6. Thermoplastic molding composition (TP) according to any of claims 1 to 5 wherein the weight average molecular weight (Mw) of copolymer S1 is 90,000 to 120,000 g/mol, the Mw of copolymer S2 is 130,000 to 160,000 g/mol and the Mw of copolymer (C) is 90,000 to 160,000 g/mol, and where the Mw of S1, S2 and (C) is measured via GPC using UV detection.

7. Thermoplastic molding composition (TP) according to any of claims 1 to 6 wherein copolymer S1, copolymer S2 and copolymer (C) are solely composed of styrene and acrylonitrile.

8. Thermoplastic molding composition (TP) according to any of claims 1 to 7 wherein the weight ratio of styrene and acrylonitrile of copolymer S1, copolymer S2 and copolymer (C) is 70:30 to 60:40, preferably 70:30 to 65:35.

9. Thermoplastic molding composition (TP) according to any of claims 1 to 8 wherein as component (C) (= copolymer (C)) copolymer S1 is used.

10. Thermoplastic molding composition (TP) according to any of claims 1 to 9 wherein graft copolymer GR2 has a median weight particle diameter $D_{50}$ - determined with a disc centrifuge - of 410 to 800 nm, particularly preferably from 410 to 600 nm.

11. Thermoplastic molding composition (TP) according to any of claims 1 to 10 wherein graft shell G12 of graft copolymer GR1 and graft shell G22 of graft copolymer GR2 are composed of 65 to 80 wt.-% styrene and 20 to 35 wt.-% acrylonitrile.

12. Process for the preparation of the thermoplastic molding composition (TP), comprising components (A), (B), (C), (D) and (E) according to any of claims 1 to 11 which process comprises at least the following steps:

(i) providing the at least one - optionally dried - graft copolymer GR1 and the at least one copolymer S1 in the predetermined amounts to an optionally heatable mixing device;
(ii) melt mixing of graft copolymer GR1 and copolymer S1 in the optionally heatable mixing device to obtain the polymer mixture (A);
(iii) providing the at least one - optionally dried - graft copolymer GR2 and the at least one copolymer S2 in the predetermined amounts to an optionally heatable mixing device;
(iv) melt mixing of graft copolymer GR2 and copolymer S2 in the optionally heatable mixing device to obtain the polymer mixture (B);
(v) providing components (A), (B), (C), (D) and, if present, (E), in the predetermined amounts to an optionally heatable mixing device; and
(vi) melt mixing the components (A), (B), (C), (D) and, if present (E), at temperatures in the range of from 180°C to 240°C to obtain the thermoplastic molding composition (TP).

13. Process according to claim 12, which further comprises a pre-mixing step, prior to step (v), wherein components (A) to (E) are provided to a mixing device and pre-mixed in order to obtain a homogenous particulate material mixture.

14. Shaped articles produced from the thermoplastic molding composition (TP) according to any of claims 1 to 11.

15. Use of the thermoplastic molding composition (TP) according to any of claims 1 to 11 or of shaped articles according to claim 14 for applications in the automotive and construction industry.

EP 4 359 477 B1

**Patentansprüche**

1. Thermoplastische Formmasse (TP), umfassend Komponenten (A), (B), (C), (D) und (E):

   (A): 20 bis 80 Gew.-% - bezogen auf (TP) - einer Polymermischung (A), bestehend aus:

   35 bis 65 Gew.-% - bezogen auf (A) - mindestens eines Pfropfcopolymers GR1 mit einem gewichtsmittleren Teilchendurchmesser $D_{50}$ - bestimmt mit einer Scheibenzentrifuge - von 55 bis 170 nm, gebildet aus:

   40 bis 80 Gew.-% - bezogen auf GR1 - einer Pfropfgrundlage G11, gebildet aus:

   80 bis 99,99 Gew.-% mindestens eines C1- bis C8-Alkylacrylats, und
   0,01 bis 20 Gew.-% mindestens eines di- oder polyfunktionellen vernetzenden Monomers und

   20 bis 60 Gew.-% - bezogen auf GR1 - mindestens einer Pfropfhülle G12, gebildet aus:

   50 bis 95 Gew.-% Styrol und 5 bis 50 Gew.-% Acrylnitril,
   wobei Styrol und/oder Acrylnitril teilweise (zu weniger als 50 Gew.-%) durch Methacrylnitril, alpha-Methylstyrol, Methylmethacrylat und/oder Maleinsäureanhydrid oder deren Mischungen ersetzt sein können; und

   65 bis 35 Gew.-% - bezogen auf (A) - mindestens eines Copolymers S1 aus Styrol und Acrylnitril im Gewichtsverhältnis von 75:25 bis 60:40, wobei Styrol und/oder Acrylnitril teilweise (zu weniger als 50 Gew.-%) durch Methacrylnitril, Methylmethacrylat, alpha-Methylstyrol und/oder Maleinsäureanhydrid ersetzt sein können;
   wobei das Copolymer S1 eine Schmelzvolumenrate (MVR) von 50 bis 70 ml/10 min aufweist (DIN EN ISO 1133-1:2012-03; 220°C/10 kg Belastung);

   (B): 5 bis 35 Gew.-% - bezogen auf (TP) - einer Polymermischung (B), bestehend aus:
   35 bis 65 Gew.-% - bezogen auf (B) - mindestens eines Pfropfcopolymers GR2 mit einem gewichtsmittleren Teilchendurchmesser $D_{50}$ - bestimmt mit einer Scheibenzentrifuge - von 410 bis 1000 nm, gebildet aus:

   40 bis 80 Gew.-% - bezogen auf GR2 - einer Pfropfgrundlage G21, gebildet aus:

   80 bis 99,99 Gew.-% mindestens eines C1- bis C8-Alkylacrylats, und
   0,01 bis 20 Gew.-% mindestens eines di- oder polyfunktionellen vernetzenden Monomers und

   20 bis 60 Gew.-% - bezogen auf GR2 - mindestens einer Pfropfhülle G22, gebildet aus:
   50 bis 95 Gew.-% Styrol und 5 bis 50 Gew.-% Acrylnitril,
   wobei Styrol und/oder Acrylnitril teilweise (zu weniger als 50 Gew.-%) durch Methacrylnitril, alpha-Methylstyrol, Methylmethacrylat und/oder Maleinsäureanhydrid oder deren Mischungen ersetzt sein können; und

   65 bis 35 Gew.-% - bezogen auf (B) - mindestens eines Copolymers S2 aus Styrol und Acrylnitril im Gewichtsverhältnis von 75:25 bis 60:40, wobei Styrol und/oder Acrylnitril teilweise (zu weniger als 50 Gew.-%) durch Methacrylnitril, Methylmethacrylat, alpha-Methylstyrol und/oder Maleinsäureanhydrid ersetzt sein können;
   wobei das Copolymer S2 eine Schmelzvolumenrate (MVR) von 11 bis 25 ml/10 min aufweist (DIN EN ISO 1133-1:2012-03; 220°C/10 kg Belastung);
   (C): 10 bis 40 Gew.-% mindestens eines Copolymers (C) aus Styrol und Acrylnitril in einem Gewichtsverhältnis von 75:25 bis 60:40, wobei Styrol und/oder Acrylnitril teilweise (zu weniger als 50 Gew.-%) durch Methacrylnitril, Methylmethacrylat, alpha-Methylstyrol und/oder Maleinsäureanhydrid ersetzt sein können;
   wobei das Copolymer (C) eine Schmelzvolumenrate (MVR) von 11 bis 70 ml/10 min aufweist (DIN EN ISO 1133-1:2012-03; 220°C/10 kg Belastung);
   (D): 1 bis 15 Gew.-% mindestens eines C2-C8-Alkylen-Vinylacetat-Copolymers (D) mit einem Vinylacetatgehalt von mehr als 25 Gew.-%, bezogen auf (D); und
   (E): 0 bis 10 Gew.-% an Zusatzstoffen und/oder Verarbeitungshilfsstoffen.

2. Thermoplastische Formmasse (TP) nach Anspruch 1, umfassend:

35 bis 60 Gew.-% Komponente (A),
15 bis 25 Gew.-% Komponente (B),
20 bis 30 Gew.-% Komponente (C),
2,5 bis 7 Gew.-% Komponente (D),
0,3 bis 10 Gew.-% Komponente (E).

3. Thermoplastische Formmasse (TP) nach Anspruch 1 oder 2, umfassend:

40 bis 55 Gew.-% Komponente (A),
18 bis 23 Gew.-% Komponente (B),
22 bis 26 Gew.-% Komponente (C),
4 bis 6 Gew.-% Komponente (D),
0,5 bis 8 Gew.-% Komponente (E).

4. Thermoplastische Formmasse (TP) nach einem der Ansprüche 1 bis 3, wobei C2-C8-Alkylen-Vinylacetat-Copolymer (D) einen Vinylacetatgehalt von 25,5 bis 30 Gew.-%, vorzugsweise 26 bis 28 Gew.-%, aufweist.

5. Thermoplastische Formmasse (TP) nach einem der Ansprüche 1 bis 4, wobei C2-C8-Alkylen-Vinylacetat-Copolymer (D) ein Ethylen-Vinylacetat-Copolymer ist.

6. Thermoplastische Formmasse (TP) nach einem der Ansprüche 1 bis 5, wobei das gewichtsmittlere Molekulargewicht (Mw) des Copolymers S1 90.000 bis 120.000 g/mol, das Mw des Copolymers S2 130.000 bis 160.000 g/mol und das Mw des Copolymers (C) 90.000 bis 160.000 g/mol beträgt, und wobei das Mw von S1, S2 und (C) mittels GPC unter Verwendung von UV-Detektion gemessen wird.

7. Thermoplastische Formmasse (TP) nach einem der Ansprüche 1 bis 6, wobei das Copolymer S1, das Copolymer S2 und das Copolymer (C) ausschließlich aus Styrol und Acrylnitril gebildet sind.

8. Thermoplastische Formmasse (TP) nach einem der Ansprüche 1 bis 7, wobei das Gewichtsverhältnis von Styrol und Acrylnitril des Copolymers S1, Copolymers S2 und Copolymers (C) 70:30 bis 60:40, vorzugsweise 70:30 bis 65:35 beträgt.

9. Thermoplastische Formmasse (TP) nach einem der Ansprüche 1 bis 8, wobei als Komponente (C) (= Copolymer (C)) das Copolymer S1 verwendet wird.

10. Thermoplastische Formmasse (TP) nach einem der Ansprüche 1 bis 9, wobei das Pfropfcopolymer GR2 einen gewichtsmittleren Teilchendurchmesser $D_{50}$ - bestimmt mit einer Scheibenzentrifuge - von 410 bis 800 nm, besonders bevorzugt von 410 bis 600 nm aufweist.

11. Thermoplastische Formmasse (TP) nach einem der Ansprüche 1 bis 10, wobei die Pfropfhülle G12 des Pfropfcopolymers GR1 und die Pfropfhülle G22 des Pfropfcopolymers GR2 aus 65 bis 80 Gew.-% Styrol und 20 bis 35 Gew.-% Acrylnitril gebildet sind.

12. Verfahren zur Herstellung der thermoplastischen Formmasse (TP), umfassend die Komponenten (A), (B), (C), (D) und (E) nach einem der Ansprüche 1 bis 11, wobei das Verfahren mindestens die folgenden Schritte umfasst:

(i) Bereitstellen des mindestens einen - gegebenenfalls getrockneten - Pfropfcopolymers GR1 und des mindestens einen Copolymers S1 in den vorgegebenen Mengen in einer gegebenenfalls beheizbaren Mischvorrichtung;
(ii) Schmelzmischen des Pfropfcopolymers GR1 und des Copolymers S1 in der gegebenenfalls beheizbaren Mischvorrichtung, um die Polymermischung (A) zu erhalten;
(iii) Bereitstellen des mindestens einen - gegebenenfalls getrockneten - Pfropfcopolymers GR2 und des mindestens einen Copolymers S2 in den vorgegebenen Mengen in einer gegebenenfalls beheizbaren Mischvorrichtung;
(iv) Schmelzmischen des Pfropfcopolymers GR2 und des Copolymers S2 in der gegebenenfalls beheizbaren Mischvorrichtung, um die Polymermischung (B) zu erhalten;
(v) Zuführen der Komponenten (A), (B), (C), (D) und, falls vorhanden, (E) in den vorbestimmten Mengen zu einer gegebenenfalls beheizbaren Mischvorrichtung; und
(vi) Schmelzmischen der Komponenten (A), (B), (C), (D) und, falls vorhanden, (E) bei Temperaturen im Bereich von 180°C bis 240°C, um die thermoplastische Formmasse (TP) zu erhalten.

13. Verfahren nach Anspruch 12, ferner umfassend einen Vormischschritt vor Schritt (v) in dem die Komponenten (A) bis (E) einer Mischvorrichtung zugeführt und vorgemischt werden, um ein homogenes, partikuläres Materialgemisch zu erhalten.

14. Formkörper aus der thermoplastischen Formmasse (TP) nach einem der Ansprüche 1 bis 11.

15. Verwendung der thermoplastischen Formmasse (TP) nach einem der Ansprüche 1 bis 11 oder von Formkörpern nach Anspruch 14 für Anwendungen in der Automobil- und Bauindustrie.

**Revendications**

1. Composition de moulage thermoplastique (TP) comprenant les composants (A), (B), (C), (D) et (E) :

(A) : 20 à 80 % en poids - sur la base de (TP) - d'un mélange de polymères (A) constitué de :
35 à 65 % en poids - sur la base de (A) - d'au moins un copolymère greffé GR1 ayant un diamètre moyen de particule en poids $d_{50}$ - déterminé à l'aide d'une centrifugeuse à disques - de 55 à 170 nm, composé de :
40 à 80 % en poids - sur la base de GR1 - d'une base de greffage G11 composée de :

80 à 99,99 % en poids d'au moins un acrylate d'alkyle en C1 à C8, et
0,01 à 20 % en poids d'au moins un monomère réticulant di- ou polyfonctionnel, et
20 à 60 % en poids - sur la base de GR1 - d'au moins une enveloppe de greffage G12 composée de :

50 à 95 % en poids de styrène et 5 à 50 % en poids d'acrylonitrile,
le styrène et/ou l'acrylonitrile pouvant être remplacés partiellement (moins de 50 % en poids) par du méthacrylonitrile, de l'alpha-méthylstyrène, du méthacrylate de méthyle et/ou de l'anhydride maléique ou leurs mélanges ; et
65 à 35 % en poids - par rapport à (A) - d'au moins un copolymère S1 de styrène et d'acrylonitrile en un rapport pondéral de 75:25 à 60:40, le styrène et/ou l'acrylonitrile pouvant être partiellement remplacés (moins de 50 % en poids) par du méthacrylonitrile, du méthacrylate de méthyle, de l'alpha-méthylstyrène et/ou de l'anhydride maléique ;
où le copolymère S1 a un débit volumique en fusion (MVR) de 50 à 70 ml/10 min (norme DIN en ISO 1133-1:2012 ; 220 °C/charge de 10 kg) ;

(B) : 5 à 35 % en poids - sur la base de (TP) - d'un mélange de polymères (B) constitué de :
35 à 65 % en poids - sur la base de (B) - d'au moins un copolymère greffé GR2 ayant un diamètre moyen de particule en poids $d_{50}$ - déterminé à l'aide d'une centrifugeuse à disques - de 410 à 1 000 nm, composé de :
40 à 80 % en poids - sur la base de GR2 - d'une base de greffage G21 composée de :

80 à 99,99 % en poids d'au moins un acrylate d'alkyle en C1 à C8, et
0,01 à 20 % en poids d'au moins un monomère réticulant di- ou polyfonctionnel, et
20 à 60 % en poids - sur la base de GR2 - d'au moins une enveloppe de greffage G22 composée de :

50 à 95 % en poids de styrène et 5 à 50 % en poids d'acrylonitrile,
le styrène et/ou l'acrylonitrile pouvant être remplacés partiellement (moins de 50 % en poids) par du méthacrylonitrile, de l'alpha-méthylstyrène, du méthacrylate de méthyle et/ou de l'anhydride maléique ou leurs mélanges ; et
65 à 35 % en poids - par rapport à (B) - d'au moins un copolymère S2 de styrène et d'acrylonitrile en un rapport pondéral de 75:25 à 60:40, le styrène et/ou l'acrylonitrile pouvant être partiellement remplacés (moins de 50 % en poids) par du méthacrylonitrile, du méthacrylate de méthyle, de l'alpha-méthylstyrène et/ou de l'anhydride maléique ;
où le copolymère S2 a un débit volumique en fusion (MVR) de 11 à 25 ml/10 min (norme DIN en ISO 1133-1:2012 ; 220 °C/charge de 10 kg) ;

(C) : 10 à 40 % en poids d'au moins un copolymère (C) de styrène et d'acrylonitrile en un rapport pondéral de 75:25 à 60:40, le styrène et/ou l'acrylonitrile pouvant être partiellement remplacés (moins de 50 % en poids) par du méthacrylonitrile, du méthacrylate de méthyle, de l'alpha-méthylstyrène et/ou de l'anhydride maléique ; où le copolymère (C) a un débit volumique en fusion (MVR) de 11 à 70 ml/10 min (norme DIN en ISO 1133-1:2012 ; 220 °C/charge de 10 kg) ;

(D) : 1 à 15 % en poids d'au moins un copolymère d'alkylène en C2-C8-acétate de vinyle (D) ayant une teneur en acétate de vinyle supérieure à 25 % en poids, par rapport à (D) ; et

(E) : 0 à 10 % en poids d'additifs et/ou d'auxiliaires de traitement.

2. Composition de moulage thermoplastique (TP) selon la revendication 1 comprenant :

35 à 60 % en poids du composant (A),
15 à 25 % en poids du composant (B),
20 à 30 % en poids du composant (C).
2,5 à 7 % en poids du composant (D),
0,3 à 10 % en poids du composant (E).

3. Composition de moulage thermoplastique (TP) selon la revendication 1 ou 2, comprenant :

40 à 55 % en poids du composant (A),
18 à 23 % en poids du composant (B),
22 à 26 % en poids du composant (C).
4 à 6 % en poids du composant (D),
0,5 à 8 % en poids du composant (E).

4. Composition de moulage thermoplastique (TP) selon l'une quelconque des revendications 1 à 3, dans laquelle le copolymère d'alkylène en C2-C8-acétate de vinyle (D) a une teneur en acétate de vinyle de 25,5 à 30 % en poids, de préférence de 26 à 28 % en poids.

5. Composition de moulage thermoplastique (TP) selon l'une quelconque des revendications 1 à 4, dans laquelle le copolymère d'alkylène en C2-C8-acétate de vinyle (D) est un copolymère d'éthylène-acétate de vinyle.

6. Composition de moulage thermoplastique (TP) selon l'une quelconque des revendications 1 à 5, dans laquelle le poids moléculaire moyen en poids (Mw) du copolymère S1 est de 90 000 à 120 000 g/mole, le Mw du copolymère S2 est de 130 000 à 160 000 g/mole et le Mw du copolymère (C) est de 90 000 à 160 000 g/mole, et dans laquelle le Mw de S1, S2 et (C) est mesuré par GPC en utilisant une détection UV.

7. Composition de moulage thermoplastique (TP) selon l'une quelconque des revendications 1 à 6, dans laquelle le copolymère S1, le copolymère S2 et le copolymère (C) sont composés uniquement de styrène et d'acrylonitrile.

8. Composition de moulage thermoplastique (TP) selon l'une quelconque des revendications 1 à 7, dans laquelle le rapport pondéral du styrène et de l'acrylonitrile du copolymère S1, du copolymère S2 et du copolymère (C) est de 70:30 à 60:40, de préférence de 70:30 à 65:35.

9. Composition de moulage thermoplastique (TP) selon l'une quelconque des revendications 1 à 8, dans laquelle on utilise comme composant (C) (= copolymère (C)) le copolymère S1.

10. composition de moulage thermoplastique (TP) selon l'une quelconque des revendications 1 à 9, dans laquelle le copolymère greffé GR2 présente un diamètre moyen de particule en poids $d_{50}$ - déterminé avec une centrifugeuse à disques - de 410 à 800 nm, de manière particulièrement préférée de 410 à 600 nm.

11. Composition de moulage thermoplastique (TP) selon l'une quelconque des revendications 1 à 10, dans laquelle l'enveloppe de greffage G12 du copolymère greffé GR1 et l'enveloppe de greffage G22 du copolymère greffé GR2 sont composées de 65 à 80 % en poids de styrène et de 20 à 35 % en poids d'acrylonitrile.

12. Procédé de préparation de la composition de moulage thermoplastique (TP), comprenant les composants (A), (B), (C), (D) et (E) selon l'une quelconque des revendications 1 à 11, lequel procédé comprend au moins les étapes suivantes :

(i) fourniture de l'au moins un copolymère greffé GR1 éventuellement séché et de l'au moins un copolymère S1 dans les quantités prédéterminées à un dispositif de mélange éventuellement chauffable ;
(ii) mélange à l'état fondu du copolymère greffé GR1 et du copolymère S1 dans le dispositif de mélange éventuellement chauffable pour obtenir le mélange de polymères (A) ;

(iii) fourniture de l'au moins un copolymère greffé GR2 éventuellement séché et de l'au moins un copolymère S2 dans les quantités prédéterminées dans un dispositif de mélange éventuellement chauffable ;

(iv) mélange à l'état fondu du copolymère greffé GR2 et du copolymère S2 dans le dispositif de mélange éventuellement chauffable pour obtenir le mélange de polymères (B) ;

(v) fourniture des composants (A), (B), (C), (D) et, le cas échéant, (E), dans les quantités prédéterminées à un dispositif de mélange éventuellement chauffable ; et

(vi) mélange à l'état fondu des composants (A), (B), (C), (D) et, le cas échéant, (E), à des températures comprises entre 180 °C et 240 °C pour obtenir la composition de moulage thermoplastique (TP).

13. Procédé selon la revendication 12, qui comprend en outre une étape de pré-mélange, avant l'étape (v), dans lequel les composants (A) à (E) sont fournis à un dispositif de mélange et pré-mélangés afin d'obtenir un mélange homogène de matières particulaires.

14. Articles façonnés produits à partir de la composition de moulage thermoplastiques (TP) selon l'une quelconque des revendications 1 à 11.

15. Utilisation de la composition de moulage thermoplastique (TP) selon l'une quelconque des revendications 1 à 11 ou d'articles façonnés selon la revendication 14 pour des applications dans l'industrie automobile et de la construction.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 104592667 A
- JP 2020176238 A
- CN 109627622 A
- US 2011275763 A
- US 20110275763 A
- US 2011275763 A1
- US 20110275763 A1
- DE 2420358 A
- DE 2724360 A
- DE 1911882
- EP 450485 B1

### Non-patent literature cited in the description

- **G. LAGALY** ; **O. SCHULZ** ; **R. ZIEMEHL**. Dispersionen und Emulsionen: Eine Einführung in die Kolloidik feinverteilter Stoffe einschließlich der Tonminerale. Steinkopf-Verlag, 1997, 282
- Polystyrol. **BECKER/BRAUN** ; **GAUSEPOHL/GELLERT**. Kunststoff-Handbuch. Carl-Hanser-Verlag, 1996, vol. IV
- *Journal of Applied Polymer Science*, 1965, vol. 9, 2929-2938
- **H. ZWEIFEL**. Plastics Additives Handbook. Hanser Publ., 2009